# EUROPÄISCHE PATENTSCHRIFT

(11) **EP 1 973 384 B1**
(45) Veröffentlichungstag und Bekanntmachung des Hinweises auf die Patenterteilung: **24.02.2010**
(21) Anmeldenummer: 07150445.0
(22) Anmeldetag: 27.12.2007
(51) Int. Cl.: H05B 3/84, B60R 1/06, A47G 1/00

(54) **Spiegelscheibe mit einem Substrat aus Kunststoff, ein Verfahren zu deren Herstellung sowie einen Außenspiegel mit einer solchen Spiegelscheibe**
Reflective sheet with a plastic substrate, a method for the production thereof as well as an outside mirror with such a reflective sheet
Vitre miroir dotée d'un substrat en plastique, son procédé de fabrication et rétroviseur doté d'une telle vitre miroir

(30) Priorität: 21.03.2007 DE 102007013598
(43) Veröffentlichungstag der Anmeldung: 24.09.2008
(73) Patentinhaber: MEKRA Lang GmbH & Co. KG, 90765 Fürth (DE)
(72) Erfinder: Lang, Werner, 91465 Ergersheim (DE); Bauer, Jochen, 91465 Ergersheim (DE); Felbinger, Willi, 91478 Markt Nordheim (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 1 566 318
- EP-B1- 1 510 105
- WO-A-99/62303
- DE-A1- 19 860 941
- FR-A- 2 695 789
- US-A1- 2004 071 983

## Beschreibung

Die Erfindung betrifft eine Spiegelscheibe mit einem Substrat aus Kunststoff nach Anspruch 1, ein Verfahren zu deren Herstellung nach Anspruch 10 oder 12 sowie einen Außenspiegel mit einer solchen Spiegelscheibe nach Anspruch 16.

Spiegelscheiben mit einem Substrat aus Kunststoff deren Spiegelschicht aus einer Chromschicht besteht, die galvanisch auf dem Kunststoffsubstrat aufgebracht worden ist, sind bekannt. In der Regel werden solche Spiegel mit einer Flächenheizfolie versehen, bei der der Heizleiter zwischen einer Trägerfolie und einer Deckfolie angeordnet ist.

In bestimmten Fällen ist es auch möglich, die Heizleiterbahnen direkt auf die Spiegelscheibe aufzudrucken. Dieses Verfahren ist jedoch insbesondere bei nicht planen Spiegelscheiben aufwendig. Aufgrund des geringen Gewichts des Kunststoffsubstrats im Vergleich zu Glas haben diese Spiegel den Vorteil des geringeren Gewichts. Allerdings ist die Herstellung vor allem aufgrund der aufwendigen Galvanisierung von Kunststoff im Vergleich zu Spiegeln aus Glas erheblich teurer, so dass sich derartige "Kunststoffspiegel" nur in Einzelfällen für Spezialanwendungen durchgesetzt haben.

Eine Schutzschicht eines Heizleiters auf der Rückseite einer Spiegelscheibe ist aus DE 33 09 024 C2 bekannt.

Die DE 10 2005 054 611 A1 zeigt das Aufbringen einer mäanderförmigen Widerstandsschicht auf die Rückseite eines beheizbaren Spiegels mittels Schablonen, wobei beim Beschichten in der Fläche des Negativbildes kein Metall abgeschieden wird.

Dazu offenbart DE 603 08 022 T2 eine Spiegelscheibe gemäß dem Oberbegriff von Anspruch 1.

Ausgehend von DE 603 08 022 T2 ist es daher Aufgabe der vorliegenden Erfindung eine Spiegelscheibe mit einem Substrat aus Kunststoff anzugeben, dessen Herstellungskosten im Vergleich zu den bisher bekannten Spiegelscheiben aus Kunststoff verringert sind. Weiter ist es Aufgabe der Erfindung ein entsprechendes Herstellungsverfahren anzugeben. Weiter ist es auch Aufgabe der Erfindung, einen Außenspiegel mit einer solchen Spiegelscheibe anzugeben. Die Lösung dieser Aufgabe erfolgt durch die Merkmale der Ansprüche 1, 10,12 bzw. 16.

Dadurch, dass die Heizleiter der Heizeinrichtung Teil der galvanischen Beschichtung des Kunststoffsubstrats sind, entfallen die Kosten einer zusätzlichen Flächenheizvorrichtung in Form einer Flächenheizfolie. Die Flächenheizvorrichtung ist vielmehr integraler Bestandteil der Metallschicht auf der Rückseite des Kunststoffsubstrats. Auf der Vorderseite des Kunststoffsubstrats dient diese Metallschicht als Spiegelschicht.

Die Metallschicht kann mittels Sputtern hergestellt werden. Vorzugsweise erfolgt die Beschichtung des Kunststoffsubstrats jedoch durch einen galvanischen Abscheidungsprozess - Anspruch 2. Bei der galvanischen Beschichtung von Kunststoffteilen werden diese zunächst gebeizt, so dass sich ihre Oberfläche vergrößert. Danach wird die aufgeraute Kunststoffoberfläche durch Palladium aktiviert. Danach erfolgt stromlose das Aufbringen einer Nickelschicht. Nunmehr können verschiedene Metallschichten aus Kupfer, Nickel, Chrom etc. galvanisch abgeschieden werden.

Durch die vorteilhafte Ausgestaltung der Erfindung nach Anspruch 3 wird verhindert, dass bei Einsatz der Spiegelscheibe im Außenbereich durch Spritzwasser oder sonstige Umwelteinflüsse Kurzschlüsse entstehen.

Durch die vorteilhafte Ausgestaltung der Erfindung nach Anspruch 4 ist das Kunststoffsubstrat auf der Rückseite mit Vorsprüngen versehen, die als Befestigungsmittel zur Befestigung der Spiegelscheibe an einer Spiegelträgerplatte und/oder als elektrische Anschlusskontakte für die Flächenheizeinrichtung dienen.

Durch die vorteilhafte Ausgestaltung der Erfindung nach Anspruch 5 sind diese Vorsprünge ebenfalls galvanisch beschichtet und so auf der Rückseite des Kunststoffsubstrats positioniert, dass sie an den Enden des Widerstandsheizleiters liegen und als elektrische Anschlusskontakte für die Flächenheizeinrichtung dienen. Auch hierdurch vereinfacht sich die Herstellung und sie wird kostengünstiger.

Gemäß der vorteilhaften Ausgestaltung der Erfindung nach Anspruch 6 sind diese Vorsprünge als Befestigungsmittel zur Befestigung der Spiegelscheibe an einer Spiegelträgerplatte ausgebildet. In diesem Fall ist eine Metallbeschichtung nicht notwendig. Die Spiegelscheibe kann daher auf einfache Weise an eine Spiegelträgerplatte montiert werden.

Gemäß der vorteilhaften Ausgestaltung der Erfindung nach Anspruch 7 besteht die galvanisch auf der Spiegelscheibe aufgeschriebene Metallschicht, die zum einen als Spiegelreflexionsschicht dient und zum anderen die Heizleiter der Flächenheizeinrichtung bildet aus einer Mehrzahl von Schichten. Diese Schichten können aus unterschiedlichen Metallen bestehen oder aus dem gleichen Metall, das in mehreren getrennten Arbeitsgängen abgeschieden wird. Hierdurch können die optischen Eigenschaften der Spiegelschicht gezielt beeinflusst werden. Auch können auf diese Weise z. b. durch das Vorsehen einer "weichen" Kupferschicht Unterschiede in den Wärmeausdehnungskoeffizienten zwischen Kunststoffsubstrat und Metallschicht ausgeglichen werden

Durch die vorteilhafte Ausgestaltung der Spiegelscheibe nach Anspruch 8 wird die Spiegelfunktion optimiert.

Das galvanische Aufbringen der Metallschicht, die auch als Spiegelschicht dient, bedingt, dass das ganze Bauteil beschichtet wird, sofern entsprechende Flächen nicht entsprechend behandelt werden. Indem des Negativbild der Widerstandsheizleiter der Flächenheizeinrichtung so behandelt bzw. abgedeckt wird, dass bei der Galvanisierung sich an diesen Stellen kein Metall abscheidet, wird die Flächenheizeinrichtung integral bei der galvanischen Abscheidung der Metallschicht hergestellt - Anspruch 10. Hierdurch wird die Flächenheizeinrichtunq in einem Verfahrensgang mit der Metallschicht hergestellt, was die Herstellung vereinfacht und daher konstengünstiger macht.

Alternativ ist es auch möglich, die Oberfläche des Kunststoffsubstrats vollständig zu beschichten. Der Widerstandsheizleiter bzw. die Widerstandsheizleiter der Flächenheizeinrichtung wird/werden danach hergestellt, in dem die Metallschicht zwischen den Widerstandsheizleitern z. B. durch mechanische Bearbeitung wieder entfernt wird - Anspruch 12.

Statt mechanischer Entfernung der Metallschicht kann dies auch mittels Ätzen - Anspruch 13 - oder mittels Laser - Anspruch 14 erfolgen.

Weitere Einzelheiten, Merkmale und Vorteile der Erfindung ergeben sich aus der nachfolgenden Beschreibung beispielhafter Ausführungsformen der Erfindung anhand der Zeichnung.

Es zeigt:
Fig. 1 eine Aufsicht auf die Rückseite einer ersten Ausführungsform der Erfindung,
Fig. 2 eine Schnittdarstellung entlang der Linie A-A in Fig. 1,
Fig. 3 ein Detail aus der Darstellung in Fig. 2,
Fig. 4 zeigt eine Detailansicht des Anschlusskontaktes der ersten Ausführungsform,
Fig. 5 eine perspektivische Darstellung einer Vorderansicht einer Spiegelscheibe gemäß einer zweiten Ausführungsform der Erfindung, und
Fig. 6 eine Darstellung der Rückseite der Spiegelscheibe nach Fig. 5.

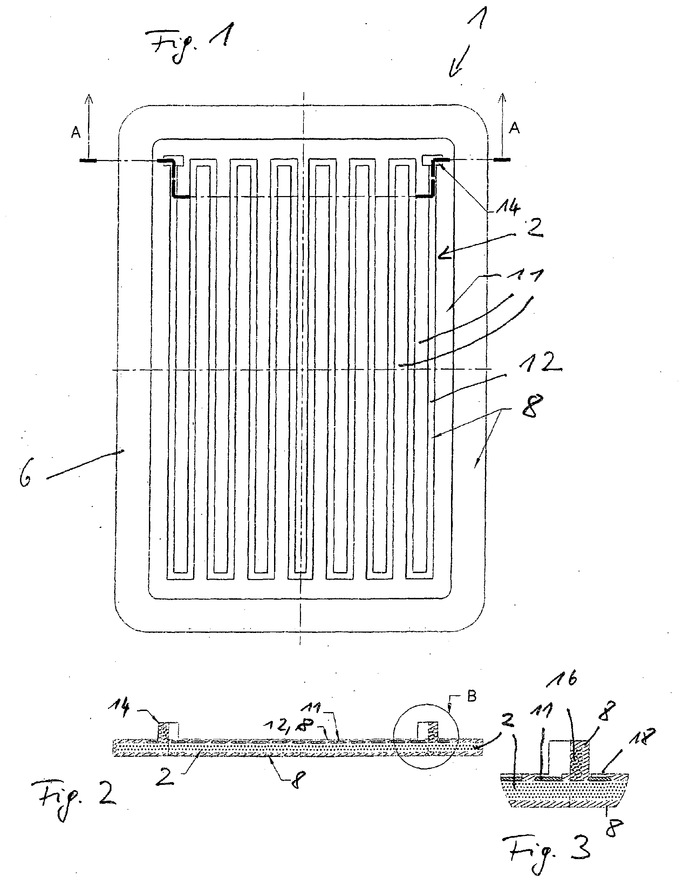

Die Fig. 1 bis 4 zeigen eine erste beispielhafte Ausführungsform der Erfindung von einer planen Spiegelscheibe. Die Spiegelscheibe ist rechteckförmig mit gerundeten Ecken.

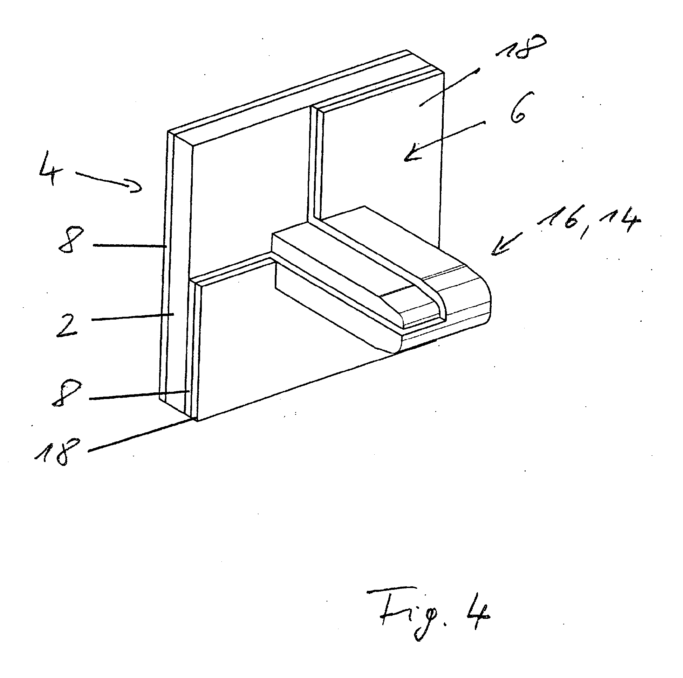

Die Figuren 1 bis 4 zeigen eine erste Ausführungsform einer Spiegelscheibe 1 gemäß der vorliegenden Erfindung. Die Spiegelscheibe 1 gemäß der ersten Ausführungsform besteht aus einem planen Kunststoffsubstrat 2 mit einer Vorderseite 4 und einer Rückseite 6. Das Kunststoffsubstrat 2 ist sowohl auf der Vorderseite 4 als auch auf der Rückseite 6 mit einer galvanisch aufgebrachten Metallschicht 8 versehen. Diese Metallschicht 8 besteht aus mehreren Metallschichten, wobei die oberste Schicht eine Chromschicht ist, die auf der Vorderseite 4 als Spiegelschicht dient. Auf der Rückseite 6 des Kunststoffsubstrats wird bei der galvanischen Beschichtung des Kunststoffsubstrats 2 eine Flächenheizeinrichtung 10 mit einem mäanderförmigen Widerstandsheizleiter 12 und zwei elektrischen Anschlusskontakten 14 integriert. Diese Integration der Flächenheizeinrichtung 10 bzw. des Widerstandsheizleiters 12 erfolgt dadurch, dass vor der galvanischen Beschichtung des Kunststoffsubstrats 2 mit der Metallschicht 8 auf der Rückseite 6 des Kunststoffsubstrats 2 das Negativbild des Widerstandsheizleiters 12 mit einem Isoliermaterial 11 abgedeckt wird, das bewirkt, dass sich in diesen Bereichen bzw. Flächen bei der anschließenden Galvanisierung kein Metall abscheidet. Durch das Isoliermaterial 11 ergeben sich bei der anschließenden Galvanisierung Ausnehmungen 13 in der Metallschicht 8, die mit Isoliermaterial 11 gefüllt sind. Die Metallschicht 8 des mäanderförmigen Widerstandsheizleiters 12 endet in zwei elektrischen Anschlusskontakten 14, die durch von der Rückseite 6 heraustretende Vorsprünge 16 gebildet werden, die ebenfalls mit der Metallschicht 8 versehen sind. Ein Vorsprung 16 bzw. einer der Anschlusskontakte 14 ist in Fig. 4 im Detail dargestellt. Zur Vermeidung von Kurzschlüssen ist der Widerstandsheizleiter 12 mit einer Isolationsschicht 18 abgedeckt.

Die integrale Herstellung des Heizleiters 12 auf der Rückseite 6 des Kunststoffsubstrats 2 kann alternativ auch dadurch erfolgen, dass anstelle einer Abdeckung der Bereiche des Negativbildes des Widerstandsheizleiters 12 und elektrischen Anschlüssen 14 eine Behandlung des Kunststoffsubstrats 2 durchgeführt wird, die bewirkt, dass diese Flächen nicht mit der Metallschicht 8 versehen werden, so dass sich metallfreie Ausnehmungen 13 ergeben, die das Kunststoffsubstrat 2 partiell freigeben.

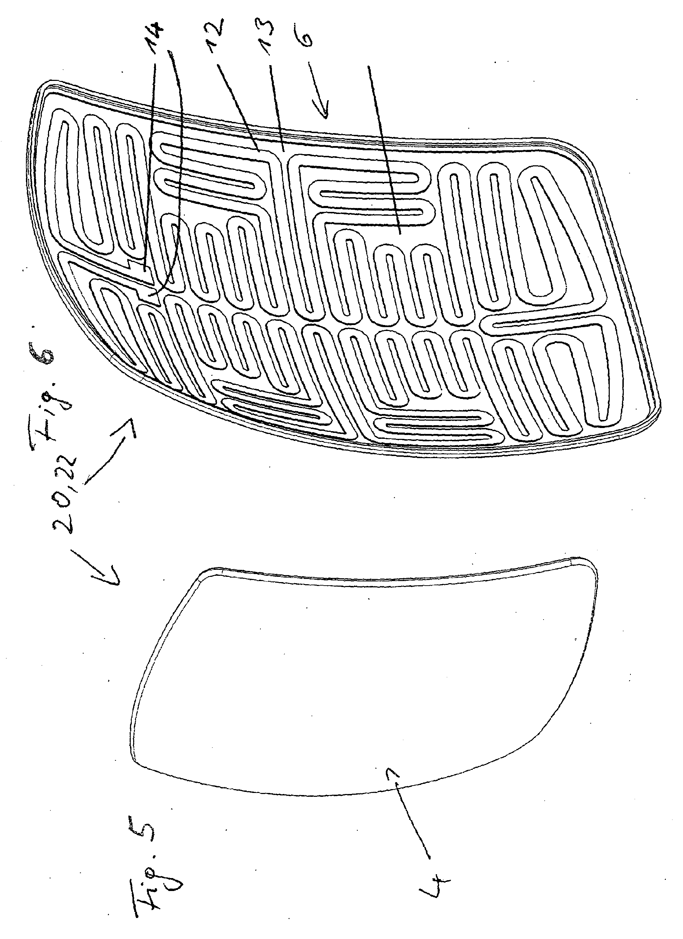

Fig. 5 und 6 zeigen eine zweite beispielhafte Ausführungsform einer Spiegelscheibe 20 mit einem Kunststoffsubstrat 22 dessen Vorderseite 4 konvex gekrümmt ist. Fig. 5 zeigt die Vorderseite 4 der Spiegelscheibe 20 und Fig. 6 die Rückseite 6 mit der Flächenheizeinrichtung 10 in Form eines mäanderförmig verlaufenden Heizleiters 12. Der mäanderförmige Heizleiter 12 ist so ausgestaltet, dass sich auch größere Zwischenräume 24 zwischen einzelnen Windungen des Heizleiters 12 ergeben, die zur Aufnahme von nicht dargestellten Befestigungselementen dienen. Die Beschichtung der Spiegelscheibe 20 mit der Metallschicht 8 erfolgt ebenfalls galvanisch und auch die Flächenheizeinrichtung 10 kann auf dieselbe Art und Weise auf der Rückseite 6 bereitgestellt werden. Der Widerstandsheizleiter 12 endet ebenfalls in zwei elektrischen Anschlusskontakten 26, die im Gegensatz zur ersten Ausführungsform als Flachkontakte ausgeführt sind und nicht als Vorsprünge.

Alternativ kann die Flächenheizeinrichtung 10 sowohl bei der ersten als auch bei der zweiten Ausführungsform dadurch bereitgestellt werden, dass zunächst das Kunststoffsubstrat 2 vollständig beschichtet wird, und danach die Metallschicht 8 auf der Rückseite 6 des Kunststoffsubstrats 2 teilweise wieder entfernt wird und zwar in Form des Negativbildes des Heizleiters 12.

### Bezugszeichenliste:

- 1: Spiegelscheibe
- 2: Kunststoffsubstrat
- 4: Vorderseite
- 6: Rückseite
- 8: Metallschicht
- 10: Flächenheizeinrichtung
- 11: Isoliermaterial
- 12: Widerstandsheizleiter
- 13: Ausnehmungen
- 14: elektrische Anschlusskontakte
- 16: Vorsprünge
- 18: Isolationsschicht

- 20: Spiegelscheibe
- 22: Kunststoffsubstrat
- 24: Zwischenräume für Befestigungselemente
- 26: elektrische Anschlusskontakte

## Patentansprüche

1. Spiegelscheibe (1; 20), mit
einem Substrat (2; 22) aus Kunststoff, das eine Vorderseite (4) und
eine Rückseite (6) aufweist, die mit einer Metallschicht (8) versehen sind, und
einer Flächenheizeinrichtung (10) mit wenigstens einem Widerstandsheizleiter (12) und elektrischen Anschlusskontakten (14; 26),
wobei die Metallschicht (8) auf der Vorderseite (4) des Substrats (2) als Spiegelschicht ausgebildet ist, und
wobei der wenigstens eine Widerstandsheizleiter (12) mit den elektrischen Anschlusskontakten (14; 26) durch die Metallschicht (8) auf der Rückseite (6) mit Ausnehmungen (13) in der Metallschicht (8) gebildet ist,
**dadurch gekennzeichnet,**
**dass** die Ausnehmungen (13) in der Metallschicht (8) in der Form des Negativbildes des wenigstens einen Widerstandsheizleiters (12) mit elektrischen Anschlusskontakten (14; 26) gebildet sind, und
**dass** das Substrat bis auf die Ausnehmungen (13) des Negativbildes vollständig mit Metall beschichtet ist.

2. Spiegelscheibe nach Anspruch 1, **dadurch gekennzeichnet, dass** die Metallschicht (8) eine galvanisch abgeschiedene Metallschicht ist.

3. Spiegelscheibe nach Anspruch 1 oder 2, **dadurch gekennzeichnet, dass** der Widerstandsheizleiter (12) mit einer Isolationsschicht (18) abgedeckt ist.

4. Spiegelscheibe nach einem der vorhergehenden Ansprüche, **dadurch gekennzeichnet, dass** das Kunststoffsubstrat (2) auf der Rückseite (6) mit Vorsprüngen (16) versehen ist.

5. Spiegelscheibe nach Anspruch 4, **dadurch gekennzeichnet, dass** wenigstens zwei der Vorsprünge (16) mit der Metallschicht (8) versehen sind und die elektrischen Anschlusskontakte (14; 26) für die Flächenheizeinrichtung (10) bilden.

6. Spiegelscheibe nach Anspruch 4, **dadurch gekennzeichnet, dass** wenigstens einer der Vorsprünge (16) als Befestigungselement ausgebildet ist.

7. Spiegelscheibe nach einem der vorhergehenden Ansprüche, **dadurch gekennzeichnet, dass** die Metallschicht (8) aus einer Mehrzahl von Schichten besteht.

8. Spiegelscheibe nach Anspruch 7, **dadurch gekennzeichnet, dass** die oberste Schicht der Metallschicht (8) aus Chrom besteht.

9. Spiegelscheibe nach einem der vorhergehenden Ansprüche, **dadurch gekennzeichnet, dass** der wenigstens eine Widerstandsheizleiter (12) mäanderförmig ausgebildet ist.

10. Verfahren zur Herstellung einer Spiegelscheibe nach einem der vorhergehenden Ansprüche mit den Verfahrenschritten:
- Bereitstellen eines Substrats (2; 22) aus Kunststoff mit einer Vorderseite (4) und einer Rückseite (6);
- Behandeln des Negativbildes des wenigstens einen Widerstandsheizleiters (12) mit elektrischen Anschlusskontakten (14; 26) auf der Rückseite des Substrats (2; 22) derart, dass sich beim nachfolgenden Galvanisierungsschritt in der Fläche des Negativbildes kein Metall abscheidet; und
- Galvanisieren des Substrats (2; 22), so dass die Vorder- und die Rückseite (4, 6) des Substrats (2; 22) mit Ausnahme der behandelten Flächen vollständig mit einer Metallschicht (8) überzogen wird.

11. Verfahren nach Anspruch 10, **dadurch gekennzeichnet, dass** der Behandlungsschritt des Negativbildes des wenigstens einen Widerstandsheizleiters (12) das Abdecken des Negativbildes mit Isoliermaterial (11) umfasst.

12. Verfahren zur Herstellung einer Spiegelscheibe nach einem der vorhergehenden Ansprüche 1 bis 9 mit den Verfahrenschritten:
- Bereitstellen eines Substrats (2; 22) aus Kunststoff mit einer Vorderseite (4) und einer Rückseite (6);
- Galvanisieren des Substrats (2; 22), so dass die Vorder- und die Rückseite (4, 6) des Substrats (2) vollständig mit einer Metallschicht (8) überzogen wird, und
- teilweises Entfernen der Metallschicht (8) auf der Rückseite (6) des Substrats (2; 22) in Form des Negativbildes des wenigstens einen Widerstandsheizleiters (12) mit elektrischen Anschlusskontakten (14; 26).

13. Verfahren nach Anspruch 12, **dadurch gekennzeichnet, dass** die Metallschicht (8) mittels Ätzen entfernt wird.

14. Verfahren nach Anspruch 12, **dadurch gekennzeichnet, dass** die Metallschicht (8) mittels Laser entfernt wird.

15. Verfahren nach einem der vorhergehenden Ansprüche 10 bis 14, **gekennzeichnet durch** den Verfahrensschritt:
- Aufbringen einer elektrischen Isolationsschicht (18) auf dem wenigstens einen Widerstandsheizleiter (12).

16. Außenspiegel für Kraftfahrzeuge mit einer Spiegelscheibe (1; 20) nach einem der vorhergehenden Ansprüche.

## Claims

1. A mirror pane (1; 20) comprising:
a substrate (2; 22) of plastics having a front side (4) and a rear side (6) each being provided with a metallic layer (8), and
a surface heating means (10) including at least one resistance heating conductor (12) and electrical connection contacts (14; 26),
wherein the metallic layer (8) on the front side (4) of the substrate (2) is implemented as a mirror layer, and
wherein the at least one resistance heating conductor (12) including the electrical connection contacts (14; 26) is formed by the metallic layer on the rear side (6) with recesses (13) in the metallic layer (8),
**characterized in that**
the recesses (13) in the metallic layer (8) are formed in the shape of a negative image of the at least one resistance heating conductor (12) including electrical connection contacts (14; 26), and
**in that** the substrate with the exception of the recesses (13) of the negative image is completely coated with metal.

2. The mirror pane according to claim 1, **characterized in that** the metallic layer (8) is a metallic layer deposited by electroplating.

3. The mirror pane according to claim 1 or 2, **characterized in that** the resistance heating conductor (12) is covered by an insulation layer (18).

4. The mirror pane according to any one of the preceding claims, **characterized in that** the plastics substrate (2) is provided with projections (16) on the rear side (6).

5. The mirror pane according to claim 4, **characterized in that** at least two of the projections (16) are provided with the metallic layer (8) and form the electrical connection contacts (14; 26) for the surface heating means (10).

6. The mirror pane according to claim 4, **characterized in that** at least one of the projections (16) is configured as a fastening member.

7. The mirror pane according to any one of the preceding claims, **characterized in that** the metallic layer (8) consists of a plurality of layers.

8. The mirror pane according to claim 7, **characterized in that** the topmost layer of the metallic layer (8) is comprised of chromium.

9. The mirror pane according to any one of the preceding claims, **characterized in that** the at least one resistance heating conductor (12) is formed in a meander-type shape.

10. A method for the manufacture of a mirror pane according to any one of the preceding claims, including the following process steps:
- providing a substrate (2; 22) of plastics having a a front side (4) and a rear side (6);
- treating the negative image of the at least one resistance heating conductor (12) having electrical connection contacts (14; 26) on the rear side of the substrate (2; 22) such that no metal is deposited in the surface of the negative image during the subsequent electroplating step; and
- electroplating the substrate (2; 22) such that the front and rear sides (4, 6) of the substrate (2; 22) with the exception of the treated surfaces are completely covered by a metallic layer (8).

11. The method according to claim 10, **characterized in that** the step of treating the negative image of the at least one resistance heating conductor (12) includes covering the negative image with insulation material (11).

12. A method for the manufacture of a mirror pane according to any one of the preceding claims 1 to 9, including the following process steps:
- providing a substrate (2; 22) of plastics having a front side (4) and a rear side (6);
- electroplating the substrate (2; 22) such that the front and rear sides (4, 6) of the substrate (2; 22) are completely covered by a metallic layer (8);
- partly removing the metallic layer (8) on the rear side (6) of the substrate (2; 22) in the shape of the negative image of the at least one resistance heating conductor (12) including electrical connection contacts (14; 26).

13. The method according to claim 12, **characterized in that** the metallic layer (8) is removed by etching.

14. The method according to claim 12, **characterized in that** the metallic layer (8) is removed by laser.

15. The method according to any one of the preceding claims 10 to 14, **characterized by** the process step of:
- applying an electrical insulation layer (18) on the at least one resistance heating conductor (12).

16. An external mirror for automotive vehicles, comprising a mirror pane (1; 20) according to any one of the preceding claims.

## Revendications

1. Vitre miroir (1 ; 20), comprenant :
un substrat (2 ; 22) en matière synthétique, présentant une face avant (4) et une face arrière (6), munies d'une couche métallique (8), et
un dispositif de chauffage de surface (10), comprenant au moins un conducteur de chauffage résistif (12) et des contacts de raccordement (14 ; 26), la couche métallique (8) étant réalisée sur la face avant (4) du substrat (2), sous forme de couche réfléchissante, et
le au moins un conducteur de chauffage résistif (12), avec les contacts de raccordement (14 ; 26), étant formé par la couche métallique (8) sur la face arrière (6), avec des évidements (13) dans la couche métallique,
**caractérisée en ce que**
les évidements (13) sont formés dans la couche métallique (8), sous forme d'image en négatif du au moins un conducteur de chauffage résistif (12) avec des contacts de raccordement (14 ; 26) électriques, et
**en ce que** le substrat est complètement revêtu de métal, jusqu'aux évidements (13) de l'image en négatif.

2. Vitre miroir selon la revendication 1, **caractérisée en ce que** la couche métallique (8) est une couche métallique déposée par voie galvanique.

3. Vitre miroir selon la revendication 1 ou 2, **caractérisée en ce que** le conducteur de chauffage résistif (12) est couvert d'une couche isolante (18).

4. Vitre miroir selon l'une des revendications précédentes, **caractérisée en ce que** le substrat (2 ; 22) en matière synthétique est muni de saillies (16) sur la face arrière (6).

5. Vitre miroir selon la revendication 4, **caractérisée en ce qu'**au moins deux des saillies (16) sont munies de la couche métallique (8) et forment les contacts de raccordement (14 ; 26) électriques pour le dispositif de chauffage de surface (10).

6. Vitre miroir selon la revendication 4, **caractérisée en ce qu'**au moins l'une des saillies (16) est réalisée sous forme d'élément de fixation.

7. Vitre miroir selon l'une des revendications précédentes, **caractérisée en ce que** la couche métallique (8) est composée d'une pluralité de couches.

8. Vitre miroir selon la revendication 7, **caractérisée en ce que** la couche la plus au-dessus de la couche métallique (8) est en chrome.

9. Vitre miroir selon l'une des revendications précédentes, **caractérisée en ce que** le moins un conducteur de chauffage résistif (12) est conformé en méandre.

10. Procédé de fabrication d'une vitre miroir selon l'une des revendications précédentes, présentant les étapes de procédé consistant à :
- fournir un substrat (2 ; 22) en matière synthétique, avec une face avant (4) et une face arrière (6) ;
- traiter l'image en négatif du au moins un conducteur de chauffage résistif (12) avec des contacts de raccordement (14 ; 26) sur la face arrière du substrat (2 ; 22), de manière que, lors de l'étape de galvanisation subséquente, aucun métal ne soit déposé dans la surface de l'image en négatif ; et
- galvaniser le substrat (2 ; 22), de manière que la face avant et la face arrière (4, 6) du substrat (2 ; 22), à l'exception des surfaces traitées, soient complètement revêtues d'une couche métallique (8).

11. Procédé selon la revendication 10, **caractérisé en ce que** l'étape de traitement de l'image en négatif du au moins un conducteur de chauffage résistif (12) comprend le recouvrement de l'image en négatif avec du matériau isolant (11).

12. Procédé de fabrication d'une vitre miroir selon l'une des revendications 1 à 9 précédentes, présentant les étapes de procédé consistant à :
- fournir un substrat (2 ; 22) en matière synthétique, avec une face avant (4) et une face arrière (6) ;
- galvaniser le substrat (2 ; 22), de manière que la face avant et la face arrière (4, 6) du substrat (2) soient complètement revêtues d'une couche métallique (8), et
- retirer partiellement la couche métallique (8) sur la face arrière (6) du substrat (2 ; 22), sous forme de l'image en négatif du au moins un conducteur de chauffage résistif (12) avec des contacts de raccordement (14 ; 26).

13. Procédé selon la revendication 12, **caractérisé en ce que** la couche métallique (8) est enlevée par gravure.

14. Procédé selon la revendication 12, **caractérisé en ce que** la couche métallique (8) est enlevée au moyen d'un laser.

15. Procédé de fabrication d'une vitre miroir selon l'une des revendications 10 à 14 précédentes, **caractérisé par** l'étape de procédé consistant à :
- appliquer une couche isolant de l'électricité (18) sur le au moins un conducteur de chauffage résistif (12).

16. Rétroviseur extérieur pour véhicules automobiles, doté d'une vitre miroir (1 ; 20) selon l'une des revendications précédentes.
